# FASCICULE DE BREVET EUROPEEN

(11) **EP 1 334 653 B1**
(45) Date de publication et mention de la délivrance du brevet: **11.10.2006**
(21) Numéro de dépôt: 03290160.5
(22) Date de dépôt: 22.01.2003
(51) Int. Cl.: A01G 3/02

(54) **Sécateur**
Baumscheren
Secateurs

(30) Priorité: 08.02.2002 FR 0201587
(43) Date de publication de la demande: 13.08.2003
(73) Titulaire: Deville S. A., 49150 Bauge (FR)
(72) Inventeur: Deville, Antoine, 49150 Vieil-Bauge (FR)
(74) Mandataire: Rémont, Claude

(56) Documents cités:
- EP-A- 0 803 185
- WO-A-91/02453
- BE-A- 843 545
- DE-A- 19 960 439
- FR-E- 19 691
- GB-A- 2 147 534

## Description

La présente invention concerne un sécateur comprenant, de manière classique connue, une lame montée de manière pivotante autour d'un axe de façon à pivoter le long d'une contre-lame, la lame présentant une face plane du côté de la contre-lame et de l'autre côté une face biseautée s'étendant longitudinalement depuis un épaulement situé près de l'axe jusqu'à la pointe de la lame, la lame présentant sur sa face biseautée, en coupe transversale, à partir de son bord tranchant, une première zone faisant un premier angle avec la face plane de la lame, et une seconde zone faisant avec la face plane de la lame un second angle inférieur au premier angle.

De façon classique, la face biseautée est réalisée par usinage à partir d'une ébauche plane. Le premier angle et le second angle ont des valeurs constantes.

Un sécateur de ce type donne d'une manière générale satisfaction à ses utilisateurs.

Toutefois, on constate une certaine fragilité de la pointe de la lame qui peut casser lorsque ladite pointe est soumise à des efforts de torsion excessifs.

Par ailleurs, l'effort musculaire qui doit être exercé pour couper une branche augmente très fortement avec le diamètre de ladite branche, puisqu'il est nécessaire de faire pénétrer de force à l'intérieur de ladite branche, sur toute la section de celle-ci, la partie de la lame proche de l'épaulement, dont l'épaisseur augmente régulièrement à partir du bord tranchant.

Le but de la présente invention est de remédier aux inconvénients des sécateurs connus, et de proposer un sécateur du type précité facilitant la coupe des branches de diamètre important tout en présentant une pointe présentant un risque moindre de casse.

Suivant la présente invention, le sécateur du type précité est caractérisé en ce que la valeur du second angle a une valeur minimale dans la région de la lame proche de l'épaulement et une valeur maximale dans une région de la lame proche de la pointe de la lame.

Ainsi, la région de la lame proche de l'épaulement, qui présente un second angle de valeur minimale et donc une épaisseur minimale, pénètre plus facilement dans le bois, notamment dans celui des branches relativement grosses. Au contraire, la région de la lame proche de la pointe de la lame, dans laquelle le second angle a une valeur maximale, a une épaisseur maximale et présente un risque de casse moindre.

Suivant une version intéressante de l'invention, la valeur du second angle augmente par exemple de manière sensiblement régulière entre l'épaulement et la pointe de la lame.

Suivant une autre version de l'invention, la valeur du second angle varie entre 6° environ près de l'épaulement et 18° environ près de la pointe, avantageusement entre 7° environ et 17° environ de préférence entre 8° environ et 15° environ.

D'autres particularités et avantages de la présente invention apparaîtront dans la description détaillée ci-après.

Aux dessins annexés, donnés uniquement à titre d'exemples non limitatifs :
- la figure 1 est une vue schématique en élévation de la face biseautée de la lame d'un sécateur selon un mode de réalisation de la présente invention ;
- la figure 2 est une vue schématique de dessus d'une partie de la lame de la figure 1, la contre-lame étant également partiellement schématisée ;
- la figure 3 est une vue de dessous de la lame de la figure 1, la contre-lame étant également partiellement schématisée ;
- les figures 4, 5 et 6 sont des vues partielles et schématiques agrandies en coupe respectivement selon IV-IV, V-V et VI-VI à la figure 1.

Dans le mode de réalisation représenté aux figures, le sécateur, schématisé en 1, comprend une lame 2 montée de manière pivotante autour d'un axe 3 de façon à pivoter le long d'une contre-lame 4. La lame 2 présente du côté de la contre-lame 4 une face plane 5 et de l'autre côté une face biseautée 6 s'étendant longitudinalement depuis un épaulement 7 situé près de l'axe 3 jusqu'à la pointe 8 de la lame 2.

Comme représenté schématiquement aux figures 2 à 6, la lame 2 présente sur sa face biseautée 6, en coupe transversale, à partir de son bord tranchant 9, une première zone 10, appelée également contre-biseau, faisant un premier angle A avec la face plane 5 de la lame 2, et une seconde zone 11, appelée aussi biseau, faisant avec la face plane 5 de la lame 2 un second angle B inférieur au premier angle A.

Le premier angle A a, de façon classique, une valeur comprise entre 17° et 30° environ, de préférence entre 20 et 25°, notamment de l'ordre de 22 à 23° environ, de façon à obtenir un bord tranchant 9 aussi résistant que possible.

Le second angle B a de manière classique une valeur comprise entre 10 et 15° environ, avantageusement égale sensiblement à 12° environ.

La forme de la coupe transversale de la lame résulte toujours d'un compromis entre la solidité de la lame 2, liée à son épaisseur, et l'importance de l'effort musculaire nécessaire pour faire pénétrer la lame dans le bois, qui est également une fonction croissante de l'épaisseur et du second angle B de la lame 2.

Suivant la présente invention, la valeur du second angle B a une valeur minimale dans la région 12 de lame 2 proche de l'épaulement 7, et une valeur maximale dans une région 13 de la lame 2 proche de la pointe 8 de ladite lame 2.

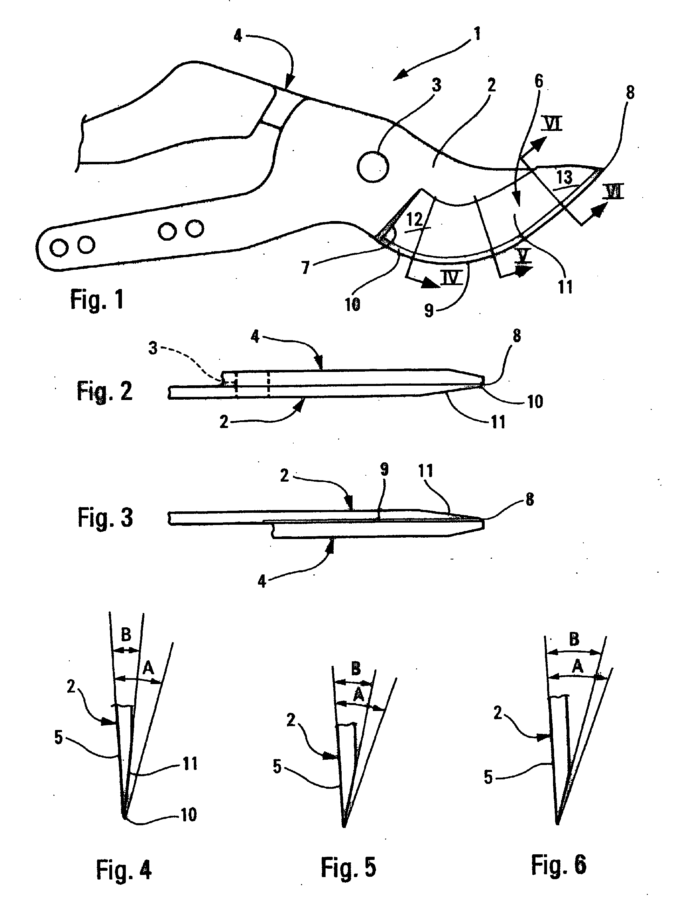

Comme représenté aux figures 4 à 6, la valeur du second angle B augmente par exemple de manière sensiblement régulière entre l'épaulement 7 et la pointe 8 de la lame 2.

Ainsi, la valeur du second angle B varie par exemple entre 6° environ près de l'épaulement 7 et 18° environ près de la pointe 8, avantageusement entre 7° environ près de l'épaulement 7 et 17° environ près de la pointe 8.

Dans le mode de réalisation représenté aux figures 4 à 6, l'angle B représenté à la figure 4 a une valeur de 8° environ, l'angle B représenté à la figure 5 a une valeur comprise entre 10 et 12° environ, et l'angle B représenté à la figure 6 a une valeur de 15° environ.

On peut faire varier la valeur de l'angle B d'une manière quelconque entre sa valeur minimale près de l'épaulement 7 et sa valeur maximale près de la pointe 8, par exemple progressivement, ou par paliers successifs, ou en alternant paliers et régions dans lesquelles la valeur de l'angle B augmente progressivement, ou de toute autre manière appropriée.

Bien entendu, on peut également faire en sorte que la valeur du premier angle A varie également entre l'épaulement 7 et la pointe 8 de la lame 2, cette variation étant prévue d'une manière appropriée quelconque.

On peut notamment prévoir une valeur de l'angle A relativement grande, par exemple de 20 à 27°, avantageusement de 22° à 25°, dans la région 12 proche de l'épaulement 7.

On peut également prévoir une valeur de l'angle A plus faible dans la région 13 proche de la pointe 8, notamment une valeur de l'ordre de 15° à 18° environ, par exemple 17° environ, égale ou sensiblement égale à la valeur de l'angle B dans cette région.

Bien entendu, la présente invention n'est pas limitée aux modes de réalisation que l'on vient de décrire, et on peut apporter à ceux-ci de nombreux changements et modifications en restant dans le domaine de l'invention, tel que défini par les revendications.

## Revendications

1. Sécateur (1), comprenant une lame (2) montée de manière pivotante autour d'un axe (3) de façon à pivoter le long d'une contre-lame (4), la lame (2) présentant une face plane (5) du côté de la contre-lame (4) et de l'autre côté une face biseautée (6) s'étendant longitudinalement depuis un épaulement (7) situé près de l'axe (3) jusqu'à la pointe (8) de la lame (2), la lame (2) présentant sur sa face biseautée (6), en coupe transversale, à partir de son bord tranchant (9), une première zone (10) faisant un premier angle (A) avec la face plane (5) de la lame (2), et une seconde zone (11) faisant avec la face plane (5) de la lame (2) un second angle (B) inférieur au premier angle (A), **caractérisé en ce que** la valeur du second angle (B) a une valeur minimale dans la région (12) de la lame (2) proche de l'épaulement (7) et une valeur maximale dans une région (13) de la lame (2) proche de la pointe (8) de la lame (2).

2. Sécateur selon la revendication 1, **caractérisé en ce que** la valeur du second angle (B) augmente par exemple de manière sensiblement régulière entre l'épaulement (7) et la pointe (8) de la lame (2).

3. Sécateur selon la revendication 1 ou 2, **caractérisé en ce que** la valeur du second angle (B) varie entre 6° environ près de l'épaulement (7) et 18° environ de la pointe (8), avantageusement entre 7° environ et 17° environ, de préférence entre 8° environ et 15° environ.

4. Sécateur selon l'une quelconque des revendications précédentes, **caractérisé en ce que** la valeur du premier angle (A) varie également entre l'épaulement (7) et la pointe (8) de la lame (2).

5. Sécateur selon la revendication 4, **caractérisé en ce que** le premier angle (A) a une valeur de l'ordre de 20 à 27°, avantageusement de 22 à 25°, dans la région (12) proche de l'épaulement (7), et une valeur de l'ordre de 15° à 18° environ, par exemple 17° environ, égale ou sensiblement égale à la valeur du second angle (B) dans la région (13) proche de la pointe (8).

## Claims

1. Secateurs (1), comprising a blade (2) mounted in a pivoting manner about a spindle (3) so as to pivot along a counterblade (4), the blade (2) having a planar face (5) on the counterblade (4) side and, on the other side, a bevelled face (6) extending longitudinally from a shoulder (7), situated near the spindle (3), to the tip (8) of the blade (2), the blade (2) having on its bevelled face (6), in cross section and starting from its cutting edge (9), a first area (10) forming a first angle (A) with the planar face (5) of the blade (2), and a second area (11) forming with the planar face (5) of the blade (2) a second angle (B), which is less than the first angle (A), **characterized in that** the value of the second angle (B) has a minimum value in the region (12) of the blade (2) near the shoulder (7) and a maximum value in a region (13) of the blade (2) near the tip (8) of the blade (2).

2. Secateurs according to Claim 1, **characterized in that** the value of the second angle (B) increases for example in a substantially regular manner between the shoulder (7) and the tip (8) of the blade (2).

3. Secateurs according to Claim 1 or 2, **characterized in that** the value of the second angle (B) varies between about 6° near the shoulder (7) and about 18° of [sic] the tip (8), advantageously between about 7° and about 17°, preferably between about 8° and about 15°.

4. Secateurs according to any one of the preceding claims, **characterized in that** the value of the first angle (A) likewise varies between the shoulder (7) and the tip (8) of the blade (2).

5. Secateurs according to Claim 4, **characterized in that** the first angle (A) has a value of the order of 20 to 27°, advantageously of 22 to 25°, in the region (12) near the shoulder (7), and a value of the order of about 15° to 18°, for example about 17°, equal or substantially equal to the value of the second angle (B), in the region (13) near the tip (8).

## Patentansprüche

1. Gartenschere (1) mit einer Klinge (2) die derart schwenkbar um eine Achse (3) angebracht ist, dass sie entlang einer Gegenklinge (4) schwenkt, wobei die Klinge (2) eine ebene Fläche (5) auf der Seite der Gegenklinge (4) und eine abgeschrägte Fläche (6) auf der anderen Seite aufweist, weiche sich in Längsrichtung von einem nahe der Achse (3) angeordneten Ansatz (7) bis zur Spitze (8) der Klinge erstreckt, wobei die Klinge (2) auf ihrer abgeschrägten Fläche (6) im Querschnitt, ausgehend von ihrer Schneidkante (9) einen ersten Bereich (10) aufweist, der mit der ebenen Fläche (5) der Klinge (2) einen ersten Winkel (A) bildet, und einen zweiten Bereich (11), der mit der ebenen Fläche (5) der Klinge (2) einen zweiten Winkel (B) bildet, der kleiner als der erste Winkel (A) ist, **dadurch gekennzeichnet, dass** der Wert des zweiten Winkels (B) einen Minimalwert in dem Bereich (12) der Klinge (2) aufweist, der in der Nähe des Ansatzes (7) liegt, und einen Maximalwert in einem Bereich (13) der Klinge (2), der in der Nähe der Spitze (8) der Klinge (2) liegt.

2. Gartenschere gemäß Anspruch 1, **dadurch gekennzeichnet, dass** der Wert des zweiten Winkels (B) beispielsweise praktisch regelmäßig zwischen dem Ansatz (7) und der Spitze (8) der Klinge (2) größer wird.

3. Gartenschere gemäß Anspruch 1 oder 2, **dadurch gekennzeichnet, dass** der Wert des zweiten Winkels (B) zwischen ungefähr 6° in der Nähe des Ansatzes (7) und ungefähr 18° in der Nähe der Spitze (8), vorteilhafter Weise zwischen ungefähr 7° und ungefähr 17°, vorzugsweise zwischen ungefähr 8° und ungefähr 15° variiert.

4. Gartenschere gemäß irgendeinem der vorherigen Ansprüche, **dadurch gekennzeichnet, dass** der Wert des ersten Winkels (A) ebenfalls zwischen dem Ansatz (7) und der Spitze (8) der Klinge (2) variiert.

5. Gartenschere gemäß Anspruch 4, **dadurch gekennzeichnet, dass** der erste Winkel (A) einen Wert in der Größenordnung von 20 bis 27°, vorteilhafter Weise von 22 bis 25° in dem Bereich (12) in der Nähe des Ansatzes (7) und einen Wert in der Größenordnung von ungefähr 15° bis 18°, beispielsweise ungefähr 17°, der gleich oder praktisch gleich dem Wert des zweiten Winkels (B) ist, in dem Bereich (13) in der Nähe der Spitze (8) aufweist.
